# EUROPÄISCHE PATENTSCHRIFT

(11) **EP 0 816 029 B1**
(45) Veröffentlichungstag und Bekanntmachung des Hinweises auf die Patenterteilung: **09.06.2004**
(21) Anmeldenummer: 97110486.4
(22) Anmeldetag: 26.06.1997
(51) Int. Cl.: B27B 31/00, B23Q 7/04, B27F 1/02, B27C 9/00, B27M 1/08

(54) **Abbundanlage zur Bearbeitung von stangenförmigen Holzwerkstücken**
Trimming machine for working bar-shaped wooden workpieces
Machine de taillage pour l'usinage des pièces de bois en barre

(30) Priorität: 28.06.1996 DE 19626127
(43) Veröffentlichungstag der Anmeldung: 07.01.1998
(73) Patentinhaber: Hundegger, Hans, D-87749 Hawangen (DE)
(72) Erfinder: Hundegger, Hans, D-87749 Hawangen (DE)
(74) Vertreter: Pfister, Helmut, Dipl.-Ing.

(56) Entgegenhaltungen:
- EP-A- 0 698 455
- EP-A- 0 698 456
- DE-C- 3 420 080
- FR-A- 2 689 807

## Beschreibung

Die Erfindung betrifft eine Abbundanlage für die Bearbeitung von stangenförmigen Holzwerkstücken, insbesondere Holzbalken, Brettern und dergleichen, gemäß dem Oberbegriff des Anspruchs 1. Eine derartige Abbundanlage ist aus der DE-PS 34 20 080 bekannt. Die dort beschriebene Abbundanlage weist eine Transporteinrichtung mit einem Kopplungselement auf, daß mit einen Dorn versehen ist. Das Kopplungselement ist an das auf einer Auflage liegende und hierauf bewegliche Werkstück anstellbar, wodurch der Dorn in das Werkstück eingedrückt wird. Das Antriebsorgan wird dann entlang der Führungsbahn motorisch bewegt und das mit dem Antriebsorgan verbundene Kopplungselement zieht das angekuppelte Werkstück entlang der Auflage an verschiedenen Bearbeitungsaggregaten der Abbundanlage vorbei. Die Funktion des Mitnehmers, der die für den Vorschub erforderliche Kraft auf das Werkstück überträgt, wird hierbei von dem eingedrückten Dorn übernommen.

Diese bekannte Abbundanlage hat den großen Vorteil, daß stangenförmige Holzwerkstücke, wie zum Beispiel Dachbalken oder - sparren automatisiert auf einer Linie bzw. Anlage bearbeitet werden. Dabei wird der von der Transporteinrichtung gezogene Balken längs der Auflage an verschiedenen Bearbeitungsaggregaten vorbeigeführt, durch die unterschiedliche Bearbeitungen an ihm vorgenommen werden. So sind zum Beispiel Sägen in Querrichtung vorgesehen, die die Balken in den erforderlichen Längen und unter verschiedenen Winkeln ablängen, während Fräsen Quer- oder Längsnuten in das Werkstück einbringen. Auf diese Weise werden beispielsweise die zum Bau eines Dachstuhles benötigten Werkstücke bereits in der Zimmerei vorgefertigt, wodurch teure Handarbeit eines Zimmermanns auf der Baustelle eingespart wird.

Ein besonderer Vorteil einer derartigen Abbundanlage besteht darin, daß die für die automatische Bearbeitung der Werkstücke benötigten Daten direkt aus dem Rechner eines Konstrukteurs, zum Beispiel eines Zimmermanns, eines Bauingenieurs oder eines Architekten in die computergestützte (CNC-) Steuerung der Anlage eingelesen werden und diese dann anhand dieser Daten die Bearbeitung vollautomatisch durchführt.

Bei Verwendung einer derartigen Abbundanlage ist es jedoch wünschenswert, daß das Werkstück auf der Auflage in beide Richtungen lagegenau bewegt werden kann, um dem Bearbeitungsaggregat zum Beispiel zu ermöglichen, mehrere Längsbearbeitungen nacheinander vorzunehmen. Die bekannten Schleppeinrichtungen, die wie oben beschrieben, das Werkstück mittels eines eingedrückten Dornes transportieren, haben jedoch in diesem Zusammenhang den Nachteil, daß das Werkstück nicht oder nicht ausreichend genau in Querrichtung geführt wird.

So wird der Dorn oft im vorderen Drittel des Werkstückes eingedrückt, so daß sich durch den nachgeordneten Schwerpunkt während des Vorschubes automatisch eine Selbstzentrierung in Querrichtung einstellt. Wird das Werkstück jedoch bei einer solchen Abbundanlage zurückgefahren, so kehrt sich dieser Effekt um und das Werkstück wird umso leichter von der gewünschten Bahnlinie abweichen. Auch bei der Bearbeitung von kurzen Werkstücken mit einer Länge von beispielsweise 1 m ist aufgrund des geringen Gewichts die Führung in Längsrichtung nur ungenau und der oben genannte Selbstzentrierungseffekt kann sich aufgrund des zwangsläufig geringen Abstandes des Schwerpunktes von der Einkuppelstelle nur schwach ausgeprägt einstellen.

Ein weiterer Nachteil der bekannten Anlagen besteht darin, daß durch das Eindrücken des Dornes das Werkstück relativ stark beschädigt wird. Die auf den gattungsgemäßen Abbundanlagen zu bearbeitenden Holzwerkstücke sind in der Regel derart vorgesägt, daß die Maserung des Holzes in Längsrichtung der Auflage, daß heißt in Vorschubrichtung, und parallel zum einzudrückenden Dorn der Transporteinrichtung verläuft. Wird in ein solches Werkstück nun ein verhältnismäßig dicker Dorn eingetrieben, so wird das oft weiche Holz zunächst verdrängt, wodurch die Faser des Holzes unter Zugspannung gesetzt werden, bis sie ab einer bestimmten Eindringtiefe dann reißen. Weiterhin besteht bei einigen Holzarten durch das verhältnismäßig große Auseinanderdrücken der Fasern die Gefahr des Spleißens.

Schließlich ist bei den bekannten Abbundanlagen nachteilhaft, daß das an der Oberseite des auf der Auflage aufliegenden Werkstückes anliegende Kopplungselement meist eine Bearbeitung dieser Oberseite unmöglich macht, da die zu bearbeitenden Werkstück oft schmal sind. Eine Bearbeitung der oberen Randbereiche, zum Beispiel durch Anfasen der Längskanten oder durch Einbringen einer Nut ist jedoch häufig notwendig, so daß in diesen Fällen das Werkstück in den bekannten Abbundanlagen gedreht und erneut eingespannt werden muß, wodurch zum einen ein zusätzlicher Bearbeitungsschritt erforderlich wird, und zum anderen eine zusätzlich Ansatzstelle des Dornes das Werkstück beschädigt.

Eine weitere Abbundanlage ist aus EP 0 698 456 A vorbekannt.

Aufgabe der Erfindung ist es daher, eine Abbundanlage mit einer einfachen Transporteinrichtung zu schaffen, die Werkstücke unterschiedlicher Länge positionsgenau und mit möglichst geringer Beschädigung entlang der Bearbeitungsaggregate zu führen vermag.

Diese Aufgabe wird nach der Erfindung gemäß den Merkmalen des Anspruchs 1 gelöst.

Durch die erfindungsgemäße Ausgestaltung des Mitnehmers kann der Mitnehmer längs der Faserrichtung des Holzes in das Werkstück eingesteckt werden und kann durch die plattenförmige Ausgestaltung mit der damit verbundenen Längsausdehnung das Werkstück in Vorschubrichtung hinreichend genau führen und positionieren. Dabei kann der Mitnehmer eine langgezogene Schneide oder auch mehrere, nebeneinander oder hintereinander angeordnete Schneiden aufweisen. Durch die Verwendung mehrerer, nebeneinander angeordneter Schneiden wird die in das Werkstück einbringbare Vortriebskraft in Vorschubrichtung erhöht, jedoch auch die Breite des Mitnehmers erhöht, so daß ein geringerer bearbeitbarer Bereich der Seite des Werkstückes zur Verfügung steht, an die das Kopplungselement angesetzt wird.

Eine längere Schneide bzw. mehrere hintereinander angeordnete Einzelschneiden haben den Vorteil, daß inbesondere auch bei kurzen Werkstücken die Querführung des Werkstückes verbessert wird, wodurch insbesondere das Werkstück mehrfach auf der Auflage vor- und zurückfahrbar ist. Weiterhin wird bei langen, schweren Werkstücken durch eine längere Schneide die Vortriebskraft in Vorschubrichtung aufgrund der Reibung an den in das Werkstück eingedrückten Querflanken erhöht. Die Vortriebskraft kann noch weiter erhöht werden, wenn mehrere Schneiden an dem Mitnehmer angeordnet sind.

Es ist vorgesehen, daß die Schneide einstückig mit dem Mitnehmer verbunden ist. Es ist aber auch vorstellbar, daß die Schneide getrennt von dem Mitnehmer ist bzw. Befestigungsmittel, zum Beispiel, Schrauben vorgesehen sind, die die Schneide an dem Mitnehmer befestigen. Durch solch eine Ausgestaltung ist es möglich, die Schneide bei Verschleiß einfach zu wechseln und eine neue, geschliffene Schneide einzusetzen.

Es ist nicht zwingend vorgesehen, daß der ganze Mitnehmer in das Werkstück eingedrückt wird. Es ist bei gewissen Anwendungen von Vorteil, zum Beispiel wenn sehr dicke Werkstücke bearbeitet werden, die den Platz zwischen der Werkstückauflage und der Führungsbahn so sehr aufbrechen, daß ein längerer, herausstehender Mitnehmer nicht verwendbar ist. Umgekehrt ist es von Vorteil, wenn verhältnismäßig schmale Werkstücke an der dem Kupplungselement zugewandten Seite bearbeitet werden, wo ein nur im Endbereich mit der Schneide in das Werkstück einstechender Mitnehmer die Bearbeitung durch die Bearbeitungsaggregate nicht behindert.

Zur Erleichterung des Einstechvorganges ist es ferner günstig, daß die Schneide im Verwendungszustand um einen Anstellwinkel zur Ebene der Oberfläche des Werkstücks in Vorschubrichtung abgewinkelt ist, wobei bei einer bevorzugten Ausgestaltung das dem Werkstück zugewandte Ende der Schneide mit einer auf die Vorschubrichtung rechtwinkligen Seite des Mitnehmers eine Spitze bildet. Die dem Werkstück zugewandte Schneide der Schneidkante ist zum Beispiel parallel, oder unter einem Winkel zur Vorschubrichtung ausgerichtet. Der Vorteil einer abgewinkelten Schneide besteht darin, daß die Kraft zum Eindrücken des Mitnehmers in das Holz kontinuierlich wächst, hingegen bei einer parallel ausgerichteten Schneidkante unter Umständen ein harter Schlag auftreten kann. Diese beiden Einsatzmöglichkeiten können je nachdem welches Werkstückmaterial bearbeitet wird eingesetzt werden. Die spitz zusammenlaufenden Schneiden ist zum Beispiel bei härteren Hölzern von Vorteil.

Die Schneide selbst ist geradlinig ausgebildet, alternativ weist sie eine Kreisbogenform auf. Im zweiten Fall kann der Mitnehmer einfach durch entsprechendes Heraustrennen eines Kreissegmentes aus einer rechteckigen Platte und anschließendes Anschleifen der sich ergebenden Kreislinie hergestellt werden. Dabei kann die Sehne des von der Schneide beschriebenen Kreisbogens im Verwendungszustand parallel zur Ebene der Oberfläche des Werkstücks in Vorschubrichtung oder in einem Anstellwinkel hierzu angeordnet sein.

Die Mitnehmer werden sowohl auf das Kopplungselement aufgesetzt werden und an diesem entweder durch Schrauben, Löten oder Schweißen oder durch eine ausreichend feste Steckverbindung befestigt oder auch einstückig mit dem Kopplungselement verbunden. Eine einstückige Verbindung ist insbesondere dann sinnvoll, wenn auch das Kopplungselement plattenförmig ausgebildet ist, wodurch ein noch größerer Arbeitsbereich an der Ansatzseite des Kopplungselementes zur Verfügung gestellt wird.

In einer bevorzugten Ausgestaltung der Erfindung ist vorgesehen, daß der Mitnehmer eine zweite Schneide aufweist. Diese zweite Schneide kann identisch mit der ersten sein, sie kann aber auch eine unterschiedliche Ausgestaltung aufweisen. Auch ist zum Beispiel vorgesehen, daß die zweite Schneide in Längsrichtung gegenüber der Vorschubrichtung um einen zweiten Anstellwinkel abgewinkelt ist und die erste Schneide gegensinnig zur zweiten Schneide angeordnet ist. Es können somit eine Vielzahl von verschiedenen Kopplungseffekten erreicht werden. Zum Beispiel ist vorgesehen, daß die beiden Schneiden benachbart, relativ nahe zusammen angeordnet sind und zusammen eine gemeinsame Spitze bilden. Eine solche Ausgestaltung ergibt eine verhältnismäßig große Spitze.

Es ist aber auch möglich, neben einer konvexen auch eine konkave Anordnung der Schneiden zu wählen. Der Mitnehmer weist zum Beispiel eine relativ lange Erstreckung in Vorschubrichtung auf und trägt an seinen jeweiligen Enden die Schneiden. Diese Schneiden sind wiederum gegensinnig angeordnet. Durch eine solche Ausgestaltung wird eine optimale Führung des Werkstückes auf der Führungsbahn erreicht, auch wenn relativ kleine Werkstücke gefördert werden.

Eine weitere, besonders vorteilhafte Ausgestaltung der Erfindung weist einen zweiten Mitnehmer auf, der in Vorschubrichtung im Abstand von dem ersten Mitnehmer angeordnet ist und ebenfalls plattenförmig ausgebildet ist. Auch dieser zweite Mitnehmer ist bei dieser Ausführung mit zumindest einer hervorspringenden zweiten Schneide versehen. Dabei kann der zweite Mitnehmer wie der erste gestaltet sein oder eine andere Form, insbesondere eine andere Schneidengeometrie aufweisen.

So ist zum Beispiel eine am zweiten Mitnehmer angeordnete Schneide um einen zweiten Anstellwinkel abgewinkelt, wobei eine erste Schneide des ersten Mitnehmers in Längsrichtung gegensinnig zu der zweiten Schneide des zweiten Mitnehmers abgewinkelt ist. Es ist aber auch möglich, daß an beiden Mitnehmern mehrere Schneiden angeordnet sind, die jeweils untereinander sowohl in Längsrichtung, als auch in Querrichtung abgewinkelt sind.

Auch ist vorgesehen, daß ein Mitnehmer ein oder mehrere Schneiden aufweist, wobei in Kopplungselement ein oder mehrere Mitnehmer trägt. Natürlich ist auch vorgesehen, daß auf der Führungsbahn mehrere Antriebsorgane mit jeweils einem eigenen Kopplungselement und Mitnehmer bzw. Mitnehmern vorgesehen sind, die mit den Schneiden eine feste Verbindung zwischen dem Kopplungselement und dem Werkstück herstellen, um dieses in Vorschubrichtung und rückwärts hierzu zu bewegen.

Eine bevorzugte Ausgestaltung der Erfindung weist zwei Mitnehmer auf, die beide an dem plattenförmigen Kopplungselement angeordnet sind. Der erste Mitnehmer ist in Vorschubrichtung des Werkstückes im vorderen Bereich und der zweite Mitnehmer im hinteren Bereich des Kopplungselementes angeordnet. Die beiden Mitnehmer sind ebenfalls plattenförmig und haben beispielsweise eine Dicke von ca. 1 bis 2 mm, während das Kopplungselement zum Beispiel aus Stabilitätsgründen eine etwas größere Dicke aufweist. Die beiden plattenförmigen Mitnehmer können nun jeweils mehrere, hintereinander angeordnete Schneiden aufweisen. Dies kann eine Vielzahl von Schneiden sein, so daß der Mitnehmer in etwa wie ein Sägeblatt ausgebildet ist, es können jedoch auch nur zwei Schneiden sein, die etwa durch einen Spalt voneinander getrennt sind.

In einer bevorzugten Ausgestaltung sieht die Erfindung vor, daß an dem Mitnehmer eine Schneide vorgesehen ist, die einen senkrecht zur Vorschubrichtung des Werkstückes verlaufende Spalt aufweist, der die Schneide in einen ersten Schneidezahn und in einen zweiten Schneidezahn teilt. Die Schneide ist zum Beispiel sägezahnartig ausgebildet, wobei die Sägezähne jeweils durch Spalten abgesetzt sind. Eine andere Möglichkeit besteht darin, eine gegen das Werkstück spitz zulaufende Schneide in der Mitte durch den Spalt zu teilen.

Hierbei ist gefunden worden, daß es günstig ist, wenn die Schneidezähne um eine zur Vorschubrichtung parallel Biegelinie biegsam sind. Durch die Verbiegung wird erreicht, daß die Schneide sich entsprechend den auftretenden Kräften im Holz regelrecht verbeißt. Dies kann zum Beispiel aufgrund von Dichte schwankungen im Holz unterstützt werden. Hierbei besteht zum Beispiel der Schneidezahn wieder aus einer Mehrzahl von Zähnen.

Auch ist es günstig, wenn der erste Schneidzahn und der zweite Schneidzahn bzw. die erste Schneide und die zweite Schneide um eine zur Vorschubrichtung parallele Achse zueinander verkippt sind. Durch eine solchen Ausgestaltung kann bei einer entsprechenden Eindrückbewegung des Mitnehmers gegen das Werkstück eine Verbeißung der Schneide in dem Werkstück erreicht werden.

Bei einer weiteren vorteilhaften Ausgestaltung wird vorgesehen, daß die erste oder zweite Schneide bzw. der erste und zweite Schneidezahn gegenseitig angeschliffen sind. Durch die unterschiedlich angeschliffenen Flanken ergibt sich beim Einstechen, daß sich die Schneide bzw. der die Schneide bzw. den Schneidezahn haltende Mitnehmer aufgrund unterschiedlich gerichteter Querkräfte gegensinnig verbiegen. Dies geschieht als Reaktion auf die Querkräfte, die quer zur Vorschubrichtung beim Einstechen durch die Flanken der Schneide angreifen. Ein derart ausgebildetes Kopplungselement krallt sich regelrecht in dem fasrigen Holzwerkstück fest, ohne die einzelnen Fasern zu beschädigen. Gleichzeitig verbleibt rechts und links der schmalen Mitnehmer und des schmalen Kopplungselementes genügend Raum, um auch die Oberseiten des Werkstückes bearbeiten zu können.

Dieser Effekt kann neben der Verbiegung der Schneidzähne durch die beim Einstechen auftretenden Querkräfte auch durch bereits in Querrichtung vorgebogene Schneidzähne erreicht werden, wobei bei dieser Ausführungsform die Biegung der Schneidzähne nicht so einfach den Faser des Holzes angepaßt werden kann. Bei beiden Ausführungsformen können die beiden Schneiden an den beiden Schneidzähnen der Mitnehmer jeweils sowohl in Längsrichtung, als auch in Querrichtung abgewinkelt sein.

Der Schutzbereich der Erfindung wird durch die unterschiedliche Wahl der Begriffe Mitnehmer, Schneid, oder Schneidezahn für ein Element, welches in das Werkstück eingedrückt wird, nicht beschränkt.

Die Kopplungselemente werden auf verschiedene Arten an das Werkstück angestellt. Bei einer Ausführungsform ist das Kupplungselement ausfahrbar, so daß es hierdurch an das Werkstück heranfahrbar ist. Dies erfolgt sowohl von oben, als auch an jede andere Seite des Werkstückes. Insbesondere wenn das Werkstück in zwei zueinander entgegengesetzte Richtungen verschoben werden soll, ist es günstig, daß das Kopplungselement rechtwinklig an das Werkstück anstellbar ist, da dann bei beiden Vorschubrichtungen gleiche Kräfte auftreten. Es ist aber auch möglich, das Kopplungselement schräg an das Werkstück heranzufahren, wodurch eine zum Einstechen der Schneiden günstige Relativkomponente der Bewegung des Kopplungselementes in Vorschubrichtung hinzugewonnen wird. Auf diese Weise wird die Schneide bzw. werden die Schneiden nicht einfach in das Werkstück eingedrückt, sondern verkrallen sich in diesem und die Beschädigung des Werkstückes wird nochmals verringert.

Schießlich weist eine weitere Ausgestaltung der Erfindung ein drehbar gelagertes Kopplungselement auf. Es ist vorgesehen, daß das Kopplungselement in einer Position zur Transporteinrichtung arretierbar ist. Dieses Kopplungselement wird gegen das Werkstück geschwenkt, daß heißt während der Dreh- bzw. Schwenkbewegung schneidet sich der Mitnehmer in das Werkstück ein und ist in einer Position senkrecht zum Werkstück arretierbar. Eine Verschwenkbewegung ist hierbei einer geradlinigen Bewegung des Mitnehmers gegen das Werkstück gleichwertig.

Die Anpassung der Länge des Kopplungselementes an die Dicke des Werkstücks wird bei dieser Ausführungsform durch eine Längenänderung des Kopplungselementes bewirkt, es ist aber auch eine verschiebbare Lagerung des Kopplungselementes relativ zur Transporteinrichtung anwendbar.

Im Falle eines drehbaren Kopplungselementes kann dieses mehrere, im Winkel zueinander angeordnete Tragarme aufweisen, an denen jeweils ein oder mehrere Mitnehmer angeordnet sind. Ein derartiges Kopplungselement ist im Schnittpunkt der Längsachsen der Tragarme drehbar gelagert ist, wobei die Tragarme mit einem hervorspringenden freien Ende gegen das Werkstück anstellbar sind. So kann zum Beispiel einer der Tragarme mit einem Mitnehmer bestückt sein, der im rechten Bereich der Oberfläche des Werkstückes eingreift, während ein Bearbeitungsaggregat die linke Seite der Oberfläche bearbeitet. Bevor nun die Transporteinrichtung das Werkstück zum nächsten Bearbeitungsaggregat zur Bearbeitung der rechten Seite transportiert, wird das Kopplungselement soweit gedreht, bis ein anderer Tragarm mit einem zum ersten Mitnehmer in Querrichtung versetzten Mitnehmer an das Werkstück angestellt wird, wobei nun der zweite Mitnehmer in die linke Seite des Werkstückes eingreift und so die rechte Seite zur Bearbeitung freigibt.

In der Zeichnung ist ein Ausführungsbeispiel der Erfindung schematisch dargestellt. Es zeigen:
- Fig. 1: eine Seitenansicht einer erfindungsgemäßen Abbundanlage,
- Fig. 2: eine Seitenansicht des Kopplungselementes aus Fig. 1 (Einzelheit X in Fig. 1),
- Fig. 3: eine Draufsicht auf eine weitere erfindungsgemäße Abbundanlage,
- Fig. 4: eine Draufsicht auf den unteren Teil eines Kopplungselementes einer erfindungsgemäßen Abbundanlage,
- Fig. 5: eine Seitenansicht des Kopplungselementes aus Fig. 4 im Schnitt,
- Fig. 6: eine dreidimensionale Darstellung eines Mitnehmers einer erfindungsgemäßen Abbundanlage,
- Fig. 7: den Schnitt I-I aus Fig. 6,
- Fig. 8: den Schnitt II-II aus Fig. 6,
- Fig. 9: eine Draufsicht auf den unteren Teil einer weiteren Variante eines Kopplungselementes einer erfindungsgemäßen Abbundanlage,
- Fig. 11: eine Draufsicht auf eine weitere Variante eines Kopplungselements einer erfindungsgemäßen Abbundanlage.

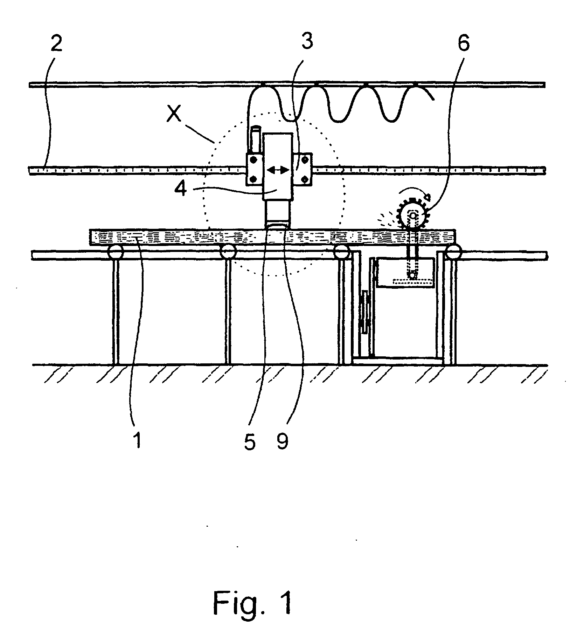

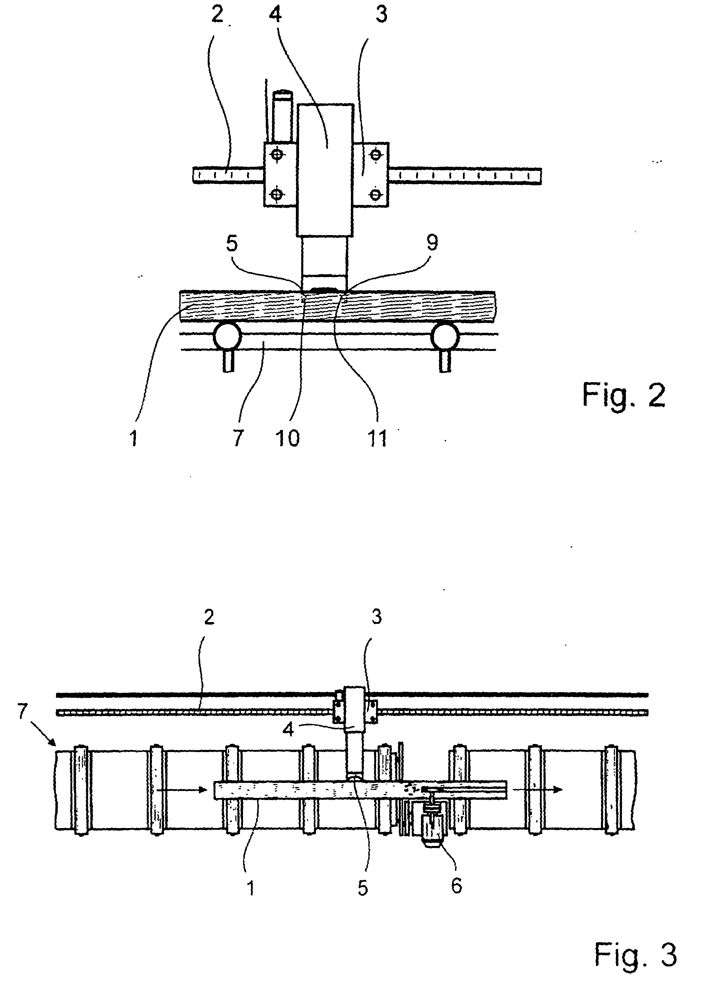

In Figur 1 ist eine erfindungsgemäße Abbundanlage dargestellt. Ein Werkstück 1 liegt auf einer Auflage einer Transporteinrichtung 7 auf und wird von einem Kopplungselement 4 entlang der Auflage transportiert, wobei es ein Bearbeitungsaggregat 6 passiert. Im gezeigten Fall arbeitet das Bearbeitungsaggregat 6 gerade eine Längsnut in das Werkstück 1 ein. Das Kopplungselement 4 ist Teil eines Antriebsorgans 3, daß entlang einer Führungsbahn 2 geführt und von einem nicht dargestellten Antriebsmotor getrieben ist. Das Kopplungselement 4 weist an seinem dem Werkstück 1 zugewandten Ende einen ersten Mitnehmer 5 und einen zweiten Mitnehmer 9 auf, die in das Werkstück 1 eingedrückt sind. Weitere Einzelheiten der Kopplung der Mitnehmers 5, 9 an das Werkstück 1 sind am besten aus Figur 2 zu erkennen.

In Figur 2 ist die Einzelheit X in Fig. 1 vergrößert dargestellt. Der erste Mitnehmer 5 und der zweite Mitnehmer 9 sind wie das Kopplungselement 4 auch plattenförmig ausgebildet und mit diesem einstückig verbunden. Der erste Mitnehmer 5 weist eine erste Schneide 10 und der zweite Mitnehmer 9 eine zweite Schneide 11 auf. Natürlich ist es auch möglich, daß an einem Mitnehmer mehrere Schneiden vorgesehen sind. Das Kopplungselement 4 ist soweit an das Werkstück herangefahren, daß beide Mitnehmer 5, 9 in den relativ weichen Holzwerkstoff des Werkstückes 1 einstechen.

Da beide Mitnehmer 5,9 plattenförmig ausgebildet sind, vermögen sie schon alleine das Werkstück 1 in Querrichtung zur Vorschubrichtung zu führen. Durch die Verwendung eines zweiten Mitnehmers 9 wird die Führung und der Halt des Werkstückes 1 an den Mitnehmern 5, 9 nochmals erhöht, so daß auch bei der Bearbeitung verhältnismäßig kurzer Werkstücke 1 eine hinreichend genaue Führung gewährleistet ist. Schließlich ist durch die linienartige Verbindung der Mitnehmer 5, 9 mit dem Werkstück 1 sichergestellt, daß kurze Werkstücke 1 nicht zwischen den Führungsrollen der Auflage verkanten und aus der Kupplung mit dem Kopplungselement 4 herausgerissen werden. Auf diese Weise können auf herkömmlichen Auflagen, auf denen bisher nur lange Werkstücke 1 bearbeitbar waren, nun auch kurze Werkstücke 1 bearbeitet werden.

In Figur 3 ist eine weitere erfindungsgemäße Abbundanlage dargestellt, die der in Figur 1 dargestellten ähnlich ist. Bei dieser Abbundanlage wird das Kopplungselement seitlich an das Werkstück herangefahren, während es bei der Abbundanlage aus Figur 1 vertikal von oben an das Werkstück angestellt wird.

Die Abbundanlage weist ein vielseitig verfahrbares Bearbeitungsaggregat 6 auf, das aus beiden Querrichtungen und von unten sowie von oben an das Werkstück 1 heranfahrbar ist. Hierzu ist das Bearbeitungsaggregat 6, das in Ruhestellung unterhalb der Transporteinrichtung 7 angeordnet ist, in die jeweiligen Richtungen quer zur Vorschubrichtung verfahrbar und die Werkzeugspindel um eine zur Vorschubrichtung und zur Werkzeugspindel selbst rechtwinklige Achse drehbar gelagert.

Die in Figur 1 bei weiterem Vorschub drohende Kollision des Kupplungselementes 4 mit dem Bearbeitungsaggregat 6 kann bei dieser Ausgestaltung dann trotz des seitlich angesetzten Kopplungselementes vermieden werden, indem das Werkzeug bei entsprechender einzubringender Nutlänge entweder direkt von der dem Bearbeitungsaggregat abgewandten Seite angesetzt wird, oder kurz vor der Kollision mit dem Kopplungselement 4 die Vorschubbewegung angehalten wird und das Werkzeug die Ansatzseite wechselt.

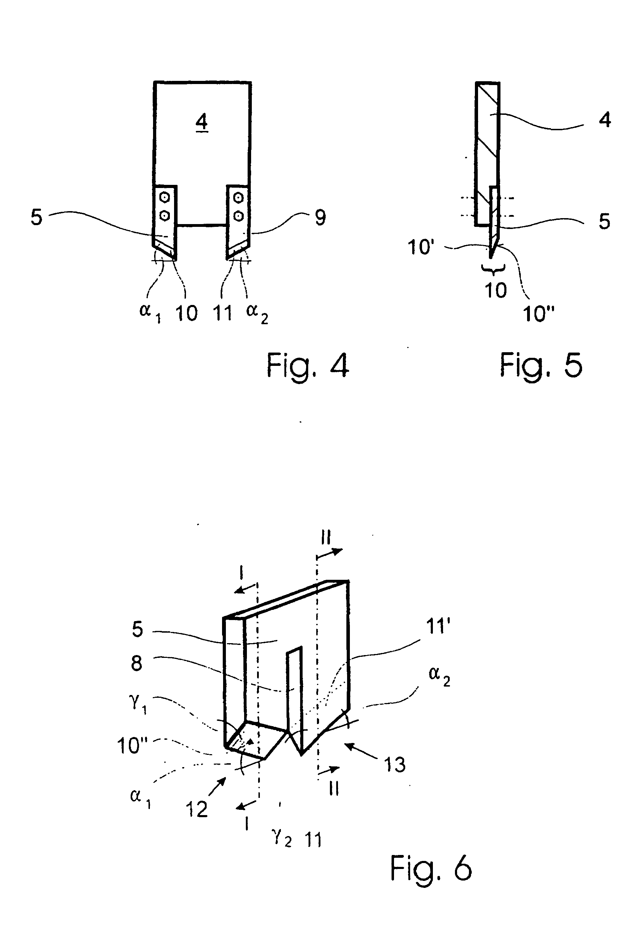

In Figur 4 ist der untere Teil eines Kopplungselementes 4 dar gestellt. Diese Ausführungsform weist einen ersten Mitnehmer 5 und einen zweiten Mitnehmer 9 auf. Der erste Mitnehmer 5 weist eine erste Schneide 10 auf, die relativ zur Vorschubrichtung um einen Winkel α₁ abgeschrägt ist. Entsprechend weist der zweite Mitnehmer 9 eine zweite, um einen Winkel α₂ abgeschrägte zweite Schneide 11 auf. Die beiden Schneiden sind zueinander gegensinnig abgeschrägt, daß heißt, die Winkel α₁ und α₂ sind betragsmäßig gleich groß, haben jedoch andere Drehrichtungen. Die Winkel α₁ und α₂ können aber auch unterschiedliche Größen aufweisen.

Eine derartige Schneidengeometrie ist insbesondere bei einem senkrecht zum Werkstück 1 angestellten Kopplungselement 4 vorteilhaft, durch das das Werkstück 1 in beide Richtungen, also vor- und rückwärts, transportiert wird. Die unterschiedliche Abschrägung der Schneiden 10, 11 bewirkt, daß in jeder Vorschubrichtung jeweils eine der beiden Schneiden ein das Werkstück 1 treibende, stumpfe Vertikalkante aufweist. Insbesondere wenn das Kopplungselement nicht rechtwinklig zur Vorschubrichtung, sondern in einem Winkel hierzu, an das Werkstück 1 angestellt wird, können die Winkel α₁ und α₂ auch betragsmäßig unterschiedlich sein, so daß auch in diesen Fällen in etwa gleich große Kräfte in beiden Vorschubrichtungen nuztbar sind.

In Figur 5 ist das Kopplungselement aus Figur 4 in einer Seitenansicht im Schnitt dargestellt. Die Mitnehmer 5, 9 sind im Querschnitt dünner als das plattenförmige Kopplungselement und auf dieses aufgeschraubt. Anstelle einer Schraubverbindung können aber auch andere, übliche Befestigungsarten, insbesondere Schweißen, Löten oder Nieten, verwendet werden. Die Schneiden 10 und 11, von denen hier nur die Schneide 10 dargestellt ist, werden von einer zum Mitnehmer 5 und zum Kopplungselement 4 parallelen Längsflanke 10' und einer im Winkel hierzu angeordneten Schneidflanke 10'' gebildet. Alternativ kann die Schneide 10 auch beidseitig angeschliffen sein.

In Figur 6 ist ein Mitnehmer 5 dargestellt, der eine erste Schneide 10 und eine zweite Schneide 11 an einem Mitnehmer aufweist. Durch die Verwendung zweier Schneiden 10, 11 an einem Mitnehmer 5 kann entweder auf die Verwendung eines zweiten Mitnehmers verzichtet werden, oder bei Verwendung eines zweiten Mitnehmers 9 die Halte- und Vortriebskraft des Kopplungselementes 4 entsprechend vergrößert werden. Dabei ist der zweite Mitnehmer 9 an dem gleichen Kopplungselement 4 angeordnet, oder ist an einem weiteren Bauteil der Abbundanlage vorgesehen.

Der in Figur 6 dargestellte Mitnehmer 5 weist einen Spalt 8 auf, der die erste Schneide 10 von der zweiten Schneide 11 trennt. Wie die in Figur 4 dargestellten Mitnehmer 5, 9 sind die Mitnehmer 5, 9 um einen Winkel α₁ bzw. α₂ gegenüber der Vorschubrichtung gegensinnig abgeschrägt. Auch hier werden die Schneiden 10, 11 von einer zum Mitnehmer 5 parallelen Längsflanke 10' (hier nicht gezeigt) bzw. 11' sowie von einer im Winkel hierzu angeordneten Schneidflanke 10" bzw. 11'' (letztere nicht sichtbar) gebildet. Dabei ist die Schneidflanke 10" um einen Winkel γ₁ und die Schneidflanke 11" um einen Winkel γ₂ abgeschrägt. Die beiden Winkel γ₁" und γ₂ sind betragsmäßig gleich groß, jedoch sind die Schneidflanken 10'' und 11'' in unterschiedliche Richtungen abgewinkelt.

Durch den zwischen den Schneidflanken angeordneten Spalt 8 wird der untere Bereich des Mitnehmers 5 in zwei voneinander getrennte Schneidzähne 12, 13 unterteilt, wobei der Schneidzahn 12 mit der ersten Schneide 10 und der Schneidzahn 13 mit der zweiten Schneide 11 versehen ist. Aufgrund der einseitig und unterschiedlich abgeschrägten Schneidflanken 10" und 11" werden die Schneidzähne 12, 13 beim Einstechen in das Werkstück in entgegengesetzte Richtungen verbiegen, so daß sich der Mitnehmer 5 in das Werkstück festkrallt. In Anstellrichtung des Kopplungselementes ergibt sich so ein zusätzlicher Formschluß, der die Führung des Werkstückes weiter verbessert und so insbesondere bei vertikaler Anstellrichtung auch kleinere Werkstücke problemlos über die Auflage führt.

Es ist möglich, daß der Mitnehmer einstückig mit der Schneide verbunden ist und der Schneide im unteren Bereich einen Spalt 8 aufweist. Genauso ist es aber auch möglich, zwei Schneiden in entsprechend geringem Abstand voneinander vorzusehen, daß diese ebenfalls einen Spalt 8 bilden.

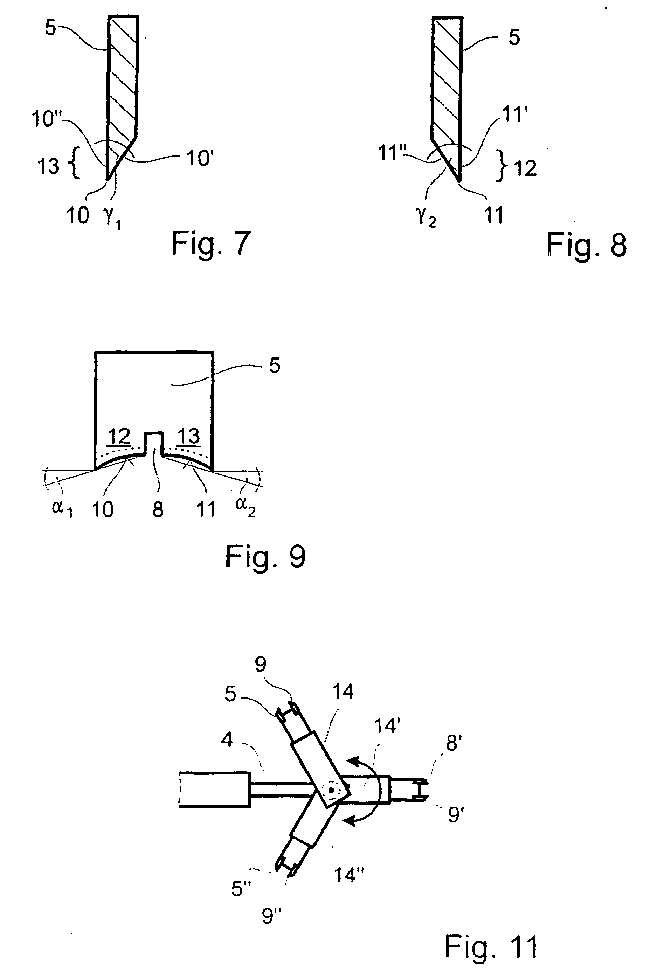

Zur Verdeutlichung der Geometrie ist in Figur 7 der Schnitt I-I und in Figur 8 der Schnitt II-II aus Figur 6 dargestellt.

In Figur 9 ist ein weiteres Ausführungsbeispiel eines Mitnehmers 5 einer erfindungsgemäßen Abbundanlage dargestellt. Die Schneiden 10 und 11 dieses Mitnehmers 5 sind nicht geradlinig sondern kreisbogenförmig ausgebildet und ebenfalls durch einen Spalt 8 voneinander getrennt. Hierdurch ergeben sich auch hier zwei Schneidzähne 12 und 13, wobei die Schneiden 10 und 11 derart ausgebildet sind, daß die Sehne des von ihnen beschriebenen Kreisbogens gegenüber der Vorschubrichtung um einen Winkel α₁ bzw. α₂ abgewinkelt sind. Auch hier sind die Schneiden zueinander gegensinnig abgewinkelt.

In Figur 11 ist ein Kopplungselement 4 einer weiteren erfindungsgemäßen Abbundanlage dargestellt. Dieses Kopplungselement 4 weist mehrere Tragarme 14, 14' und 14 " auf, die drehbar am Kopplungselement 4 gelagert sind. Die Tragarme 14, 14' und 14'' sind jeweils an ihren Enden mit einem ersten Mitnehmer 5, 5' und 5'' und einem zweiten Mitnehmer 9, 9' und 9'' versehen. Die Mitnehmer 5,5',5'' und 9, 9',9" können dabei, wie oben beschrieben, unterschiedlich ausgebildet sein und die Tragarme 14, 14', 14" können sowohl geradlinig, als auch mit einem Querversatz ausgebildet sein.

Je nach Bedarf wird bei dieser Ausführungsform einer der Tragarme 14, 14' oder 14'' in eine zur Vorschubrichtung rechtwinklige Position gedreht und durch eine Längsbewegung an das Werkstück angestellt. Hierdurch können ohne Wechsel der Mitnehmer an einer Abbundanlage verschiedene Mitnehmergeometrien verwendet werden, um zum Beispiel verschieden Werkstückarten bearbeiten zu können.

Durch die Verwendung von Tragarmen 14, 14' und 14'' mit einem seitlichen Versatz können so aber auch alle Seiten des Werkstückes bearbeitet werden. Hierzu wird zunächst ein Tragarm 14, 14' oder 14'' an das Werkstück angestellt, der mit einem in die linke Hälfte einer Werkstückseite eingreifenden Kopplungselement versehen ist. Nach Bearbeitung der rechten Hälfte dieser Oberfläche wird der entsprechende Tragarm 14, 14' oder 14'' wieder vom Werkstück abgezogen, das Kopplungselement gedreht und ein anderer Tragarm 14, 14' oder 14'' an das Werkstück angestellt, der mit nun mit einem oder mehreren Mitnehmern in die rechte, gerade bearbeitete Seite des Werkstückes eingreift. Jetzt kann, ein entsprechend geformter Tragarm 14, 14' oder 14'' vorausgesetzt, die linke Hälfte des Werkstückes bearbeitet werden.

## Patentansprüche

1. Abbundanlage für die Bearbeitung von stangenförmigen Holzwerkstücken (1), insbesondere Holzbalken, Brettern und dergleichen, mit mindestens einem Bearbeitungsaggregat (6), wobei das Werkstück (1) auf einer Auflage aufliegt, und einer Transporteinrichtung (7), die das Werkstück (1) in Vorschubrichtung zu dem Bearbeitungsaggregat (6) transportiert, wobei die Transporteinrichtung (7) eine parallel zur Vorschubrichtung des Werkstückes (1) angeordnete Führungsbahn (2) und ein an der Führungsbahn (2) geführtes, motorisch angetriebenes Antriebsorgan (3) mit einem gegen das Werkstück (1) anstellbaren Kopplungselement (4) aufweist, wobei das Kopplungselement (4) einen mit dem Werkstück (1) verbindbaren Mitnehmer (5) zum Transport des Werkstücks (1) entlang der Auflage aufweist, wobei der Mitnehmer (5) plattenförmig ausgebildet ist, **dadurch gekennzeichnet, daß** der Mitnehmer (5) derart ausgebildet ist, daß er im Verwendungszustand die Breite des Werkstückes (1) nicht überschreitet, und daß der Mitnehmer (5) an seiner dem Werkstück (1) zugewandten Seite mit wenigstens einer hervorspringenden Schneide (10) versehen ist, wobei die Schneidrichtung der Schneide (10) im wesentlichen längs zur Transportrichtung des Werkstückes (1) orientiert ist.

2. Abbundanlage nach Anspruch 1, **dadurch gekennzeichnet, daß** die Schneide (10) geradlinig ausgebildet und in Längsrichtung im Verwendungszustand gegenüber der Ebene der Oberfläche des Werkstücks in Vorschubrichtung um einen Anstellwinkel (α₁) abgewinkelt ist.

3. Abbundanlage nach einem oder mehreren der vorhergehenden Ansprüche, **dadurch gekennzeichnet, daß** der Mitnehmer (5) eine zweite Schneide (11) aufweist.

4. Abbundanlage nach einem oder mehreren der vorhergehenden Ansprüche, **dadurch gekennzeichnet, daß** die zweite Schneide in Längsrichtung gegenüber der Vorschubrichtung um einen zweiten Anstellwinkel (α₂) abgewinkelt ist und die erste Schneide (10) gegensinnig zur zweiten Schneide (11) angeordnet ist.

5. Abbundanlage nach einem oder mehreren der vorhergehenden Ansprüche, **dadurch gekennzeichnet, daß** an dem Mitnehmer eine Schneide vorgesehen ist, die einen senkrecht zur Vorschubrichtung des Werkstückes verlaufenden Spalt (8) aufweist, der die Schneide in einen ersten Schneidzahn (12) und einen zweiten Schneidzahn (13) unterteilt.

6. Abbundanlage nach einem oder mehreren der vorhergehenden Ansprüche, **dadurch gekennzeichnet, daß** die Schneidzähne (12,13) um eine zur Vorschubrichtung parallele Biegelinie biegsam sind.

7. Abbundanlage nach einem oder mehreren der vorhergehenden Ansprüche, **dadurch gekennzeichnet, daß** die erste und zweite Schneide bzw. der erste und zweite Schneidezahn gegensinnig angeschliffen sind.

8. Abbundanlage nach einem oder mehreren der vorhergehenden Ansprüche, **dadurch gekennzeichnet, daß** das Kopplungselement (4) plattenförmig ausgebildet und parallel zur Vorschubrichtung des Werkstückes (1) angeordnet ist, wobei die beiden Mitnehmer (5, 9) im vorderen und hinteren Endbereich des plattenförmigen Kopplungselementes (4) angeordnet sind.

9. Abbundanlage nach einem oder mehreren der vorhergehenden Ansprüche, **dadurch gekennzeichnet, daß** die Mitnehmer (5, 9) mit dem Kopplungselement (4) einstückig verbunden sind.

10. Abbundanlage nach einem oder mehreren der vorhergehenden Ansprüche, **dadurch gekennzeichnet, daß** das Kopplungselement (4) längs einer zur Vorschubrichtung rechtwinkligen Achse an das Werkstück (1) anstellbar ist.

11. Abbundanlage nach einem oder mehreren der vorhergehenden Ansprüche, **dadurch gekennzeichnet, daß** das Kopplungselement (4) schwenkbar gelagert ist.

12. Abbundanlage nach einem oder mehreren der vorhergehenden Ansprüche, **dadurch gekennzeichnet, daß** zur Anpassung der Länge des Kopplungselementes (4) an die Dicke des Werkstücks (1) die Lagerung des Kopplungselementes (4) relativ zur Transporteinrichtung (7) in senkrechter Richtung zur Vorschubrichtung verschiebbar ist.

## Claims

1. Bond installation for working rod-shaped wood workpieces (1), in particular wooden beams, boards and the like, with at least one working aggregate (6), the workpiece (1) being supported by a support, and a conveying device (7) which conveys the workpiece (1) in advance direction to the working aggregate (6), wherein the conveying device (7) has a guide line (2) arranged parallel to the advance direction of the workpiece (1) and a driving element (3) guided on the guide line (2) which is driven by a motor with coupling element (4) which can be adjusted towards the workpiece (1), the coupling element (4) having a catch (5) which can be connected with the workpiece (1) for the conveying of the workpiece (1) along the support, the catch (5) being designed like a slab, **characterised in that** the catch (5) is designed in such a way that it does not, in the application condition, exceed the width of the workpiece (1), and that the catch (5) has, on its side facing the workpiece (1) at least one projecting cutter (10), the cutting direction of the cutter (10) being orientated essentially longitudinally to the conveying direction of the workpiece (1).

2. Bond installation according to claim 1, **characterised in that** the cutter (10) is designed linear and is bent in longitudinal direction in the application condition towards the plane of the surface of the workpiece in advance direction at an adjustment angle (alpha 1).

3. Bond installation according to one or more of the preceding claims, **characterised in that** the catch (5) has a second cutter (11).

4. Bond installation according to one or more of the preceding claims, **characterised in that** the second cutter is bent in longitudinal direction towards the advance direction at a second adjustment angle (alpha 2), and the first cutter (10) is arranged in an opposite direction to the second cutter (11).

5. Bond installation according to one or more of the preceding claims, **characterised in that** on the catch a cutter is provided which has a gap (8) extending vertically to the advance direction of the workpiece which divides the cutter into a first cutting tooth (12) and a second cutting tooth (13).

6. Bond installation according to one or more of the preceding claims, **characterised in that** the cutting teeth (12, 13)are flexible around a flexion line parallel to the advance direction.

7. Bond installation according to one or more of the preceding claims, **characterised in that** the first and the second cutter, respectively the first and the second cutting tooth, are grinded in an opposite direction.

8. Bond installation according to one or more of the preceding claims, **characterised in that** the coupling element (4) is formed like a slab and arranged parallel to the advance direction of the workpiece (1), the two catches (5, 9) being arranged in the front and back end region of the slab-shaped coupling element (4).

9. Bond installation according to one or more of the preceding claims, **characterised in that** the catches (5, 9) are connected in one piece with the coupling element (4).

10. Bond installation according to one or more of the preceding claims, **characterised in that** the coupling element (4) can be adjusted to the workpiece (1) along an axis rectangular to the advance direction.

11. Bond installation according to one or more of the preceding claims, **characterised in that** the coupling element (4) is supported swivelling.

12. Bond installation according to one or more of the preceding claims, **characterised in that** in order to adjust the length of the coupling element (4) to the thickness of the workpiece (1) the support of the coupling element (4) can be shifted relatively to the conveying direction (7) in vertical direction to the advance direction.

## Revendications

1. Ligne d'usinage de pièces en bois de forme allongée (1), en particulier des madriers, des planches et tout autre de forme similaire comportant au moins une machine d'usinage (6), la pièce à usiner (1) est posée sur un support faisant partie d'un dispositif de transport (7) qui l'amène vers la machine d'usinage (6), le dispositif de transport (7) possède un rail de guidage (2) parallèle à la direction d'avancement de la pièce à usiner (1) guidant une commande motorisée (3) comportant un élément de couplage (4) qui peut être approché de la pièce à usiner (1) et qui comporte un élément entraîneur plat (5) pouvant être placé au contact de la pièce à usiner (1) afin de la faire coulisser sur le support, **caractérisée en ce que** l'élément entraîneur (5) possède une forme telle que dans sa position d'utilisation, sa largeur ne dépasse pas celle de la pièce à usiner (1) et que sa face orientée vers la pièce à usiner (1) possède au moins une lame (10) débordante dont le fil est approximativement parallèle à la direction de transport de la pièce à usiner (1).

2. Ligne d'usinage selon la revendication 1, **caractérisée en ce que** le fil de la lame (10) est rectiligne et possède une orientation parallèle à la direction d'avancement et **en ce qu'**il forme dans sa position d'utilisation un angle (α1) avec le plan correspondant à la surface de la pièce à usiner.

3. Ligne d'usinage selon une des deux revendications précédentes, **caractérisée en ce que** l'élément entraîneur (5) possède une deuxième lame (11).

4. Ligne d'usinage selon une ou plusieurs des revendications précédentes, **caractérisée en ce que** la deuxième lame forme parallèlement à la direction d'avancement un deuxième angle (α2) et **en ce que** la première lame (10) est orientée en sens opposé par rapport à la deuxième lame (11).

5. Ligne d'usinage selon une ou plusieurs des revendications précédentes, **caractérisée en ce que** l'élément entraîneur comporte une lame ayant une fente (8) perpendiculaire à la direction d'avancement de la pièce à usiner divisant la lame en une première dent coupante (12) et une deuxième dent coupante (13).

6. Ligne d'usinage selon une ou plusieurs des revendications, **caractérisée en ce que** les dents coupantes (12, 13) peuvent être incurvées autour d'une ligne parallèle à la direction d'avancement.

7. Ligne d'usinage selon une ou plusieurs des revendications précédentes, **caractérisée en ce que** la première et la deuxième lame ou la première et la deuxième dent coupante possèdent des tranchants en sens opposés.

8. Ligne d'usinage selon une ou plusieurs des revendications précédentes, **caractérisée en ce que** l'élément de couplage (4) possède une forme plate et est orienté parallèlement à la direction d'avancement de la pièce à usiner (1) et **en ce que** les deux éléments entraîneurs (5, 9) sont situés au niveaux des extrémités avant et arrière de l'élément de couplage (4).

9. Ligne d'usinage selon une ou plusieurs des revendications précédentes, **caractérisée en ce que** les éléments entraîneurs (5, 9) et l'élément de couplage (4) sont réalisés d'une seule pièce.

10. Ligne d'usinage selon une ou plusieurs des revendications précédentes, **caractérisée en ce que** l'élément de couplage (4) peut être déplacé contre la pièce à usiner (1) le long d'un axe perpendiculaire à la direction d'avancement.

11. Ligne d'usinage selon une ou plusieurs des revendications précédentes, **caractérisée en ce que** l'élément de couplage (4) est pivotable.

12. Ligne d'usinage selon une ou plusieurs des revendications précédentes, **caractérisée en ce que** la fixation de l'élément de couplage (4) peut être déplacée par rapport au dispositif de transport (7) selon un axe vertical et perpendiculairement à la direction d'avancement afin de pouvoir ajuster la longueur de l'élément de couplage (4) à l'épaisseur de la pièce à usiner (1).
